# NEW EUROPEAN PATENT SPECIFICATION

(11) **EP 1 299 250 B2**
(45) Date of publication and mention of the opposition decision: **25.09.2013**
(45) Mention of the grant of the patent: 20.04.2005
(21) Application number: 01947667.0
(22) Date of filing: 09.07.2001
(51) Int. Cl.: B44F 1/10, B44F 1/02, B44C 1/18, B42D 15/00, B41M 3/14

(54) **METHOD OF PROVIDING AN IMAGE ON A SUBSTRATE, AND AN INK FOR USE THEREIN**
VERFAHREN ZUR HERSTELLUNG EINES BILDES AUF EINEM SUBSTRAT, UND DABEI ANGEWENDETE TINTE
PROCEDE POUR APPLIQUER UNE IMAGE SUR UN SUBSTRAT ET ENCRE UTILISEE A CETTE FIN

(30) Priority: 10.07.2000 GB 0016918
(43) Date of publication of application: 09.04.2003
(73) Proprietor: De La Rue International Limited, Basingstoke, Hampshire RG22 4BS (GB)
(72) Inventor: MORRIS, Alan, Wokingham, Berkshire RG41 5LE (GB); STONE, David, Allen, Basingstoke, Hampshire RG23 8JE (GB); DAVIS, Sharon, Christine, Alton, Hampshire GU34 1JL (GB)
(74) Representative: Skone James, Robert Edmund
(86) International application number: PCT/GB2001/003080
(87) International publication number: WO 2002/004234

(56) References cited:
- EP-A1- 0 170 439
- EP-A1- 0 657 309
- EP-A2- 0 227 423
- WO-A1-93/24934
- WO-A1-98/18635
- WO-A1-99/65699
- US-A- 3 989 644
- US-A- 4 352 706
- US-A- 4 937 274
- US-A- 5 059 245
- US-A- 5 171 363
- US-A- 5 279 657
- US-A- 5 366 760
- US-A- 5 648 165
- US-A- 5 961 706
- US-A- 5 968 606
- US-A- 5 981 040
- US-A- 6 063 176
- PATENT ABSTRACTS OF JAPAN vol. 017, no. 468, 26 August 1993 (1993-08-26) & JP 05 111991 A (TOPPAN PRINTING), 7 May 1993 (1993-05-07)
- PATENT ABSTRACTS OF JAPAN vol. 014, no. 291, 22 June 1990 (1990-06-22) & JP 02 092635 A (TOPPAN PRINTING), 3 April 1990 (1990-04-03)
- DATABASE WPI Section Ch, Week 198950 Derwent Publications Ltd., London, GB; Class A18, AN 1989-367470 XP002184143 & JP 01 275138 A (TOPPAN PRINTING)
- PATENT ABSTRACTS OF JAPAN vol. 007, no. 259, 18 November 1983 (1983-11-18) & JP 58 142946 A (SHIKOKU KAKEN), 25 August 1983 (1983-08-25)
- PATENT ABSTRACTS OF JAPAN vol. 1998, no. 05, 30 April 1998 (1998-04-30) & JP 10 017811 A (FUKUDA METAL), 20 January 1998 (1998-01-20)
- DATABASE WPI Section Ch, Week 197732 Derwent Publications Ltd., London, GB; Class A04, AN 1977-56433y XP002184144 & JP 52 076342 A (OILESS IND), 27 June 1977 (1977-06-27)

## Description

### Field of the Invention

The present invention relates to a method for providing an optically variable effect generating structure on a substrate.

### Background to the Invention

Optically variable effect generating structures, such as diffraction gratings, holographic devices and non-holographic, reflective embossed devices, are frequently used both for decorative and security purposes. In particular, such structures are used on security documents such as identification cards, banknotes and the like to enable such substrates to be authenticated. Traditionally, in view of the delicate nature of these structures, a transfer process has been used to locate the structure on the substrate. This involves fabricating the structure on a carrier film and then transferring the structure using a hot stamping technique or the like onto the substrate. An example is described in US-A-4913504. Other transfer processes, although not suited for optically variable effect generating structures, are described in US-A-5017255, US-A-5219655, US-A-5328534 and WO-A-9515266.

WO-A-9703844 describes a method of providing a reflective security feature on security paper in which a metal is sprayed onto the surface of the paper following which it is crushed, burnished or otherwise treated to convert it to a more specularly reflective surface and this may be formed into a relief pattern. The techniques for providing the metal include electric arc, flame and plasma spraying techniques, all of which have the disadvantage of requiring high temperature processing. Other problems of such spraying include the fact that sprayed metals tend to fuse into continuous deposits which do not bend with the substrate and therefore disbond, it is very difficult to control the thickness of the deposit, it is very difficult to achieve complex shapes, and the number of materials which can be deposited is limited.

WO-A-9965699 describes a method of providing an optically variable effect generating structure on a substrate which comprises coating the substrate with an adhesive, depositing a metal powder on to the adhesive, and subsequently embossing an optically variable effect generating structure into the metal powder. The adhesive enables the subsequently deposited metal powder to be strongly adhered to the substrate, and the pattern of the deposit to be closely controlled. However, this two-step deposition is time-consuming, and therefore a more efficient method is desired.

WO-A-9818635 discloses a method of producing a holographic image on a substrate by impressing a holographic shim on to a metallic coating comprising metallic particles suspended in a resinous binder. The size and shape of the metallic particles can be varied to improve the visibility and reflectivity of the ultimate holographic image. Optimum reflectivity is said to be achieved with small, flat particles, as when pressed upon by a shim such particles are said to align better along a plane than more spherical or more amorphous particles, thereby creating a more reflective surface. The metallic inks exemplified are solvent-based inks containing aluminium particles.

Contrary to the teaching in WO-A-9818635, the present Applicant has found it difficult to achieve a level of emboss sufficient for a good holographic image using solvent-based inks containing aluminium plate particles. It would, therefore, be desirable to provide alternative metallic inks to those disclosed in WO-A-9818635 which are not subject to this problem.

### Summary of the Invention

According to a first aspect of the present invention, a method of providing an optically variable effect generating structure on a substrate comprises
a) applying to the substrate a composition comprising metallic particles dispersed in a vehicle;
b) drying the composition;
c) curing the composition by exposure to radiation selected from UV, X-rays and electron beams; and then
d) embossing into the composition, an optically variable effect generating structure, wherein the vehicle is a radiation-curable vehicle and the composition further comprises solvent in addition to any solvent included in the vehicle.

According to a second aspect of the present invention, a security document is provided which is obtainable by a method according to the first aspect of the present invention.

### Detailed Description of the Invention

The metallic compositions according to the present disclosure, and for use in the method according to the present invention, preferably comprise non-plate-like, or non-flaky, metallic particles. Typically, the metallic particles are substantially round, spherical or spheroid in shape.

The metallic particles may comprise any deformable metal. Suitable examples include tin, zinc, lead, aluminium, silver, gold, indium, cadmium and thallium, and alloys thereof, such as one containing lead and tin, although some of these metals may be considered unsuitable for use due to unacceptable toxicity or cost. The preferred metals are those which are more deformable than aluminium, and particularly those which have a hardness on the Mohs Scale of less than 3.0, and preferably less than 2.0. Preferably the metal is tin, or an alloy containing tin and another metal.

Certain of the metals suitable for use in the present invention are so much more deformable than the aluminium particles disclosed in WO-A-9818635 that they may accept an embossed image irrespective of whether they are non-plate-like or plate-like in shape. Tin is one such metal. However, in order to improve the quality of the embossed image, it is preferred that solvent-based or water-based vehicles be used for dispersion of plate-like metal particles.

The size of the metallic particles for use in the present invention will depend in part upon the effect desired, and also on the method by which the composition containing these particles is to be applied to a substrate. Particles having a size of up to 100 µm can be used. Typically, the metallic particles will have a size of at least 1 µm, for instance at least 5 µm, and preferably they will have a size of at least 30 µm, for instance in the range 30 to 60 µm, or most preferably 40 to 50 µm.

The amount of metallic particles included in the composition varies according to the metal and the effect desired. When, as is preferred, the composition comprises tin particles, typically the amount of tin particles will lie in the range 5 to 85 weight %, preferably 50 to 80 weight %, and more preferably 70 to 80 weight %, based on the total weight of the composition. Accordingly, the amount of vehicle included in the composition typically varies from 15 to 95 weight %, preferably 20 to 50 weight %, and more preferably 20 to 30 weight %, based on the total weight of the composition.

The vehicle is a radiation-curable vehicle. Cured by UV, X-rays, or electron beams. The UV curable vehicles are preferred, such as those which cure by way of a free radical mechanism. Suitable examples of UV-curable vehicles include epoxy acrylate pre-polymers, polyester acrylate pre-polymers and unsaturated polyester pre-polymers.

In addition to the radiation-curable vehicle, the composition also contains added solvent. In the context of this Application "added solvent" is defined as solvent included in the composition in addition to any solvent included in the vehicle itself. For tin-containing compositions, suitable amounts of solvent lie in the range 5 to 70 weight %, preferably 5 to 50 weight %, based on the total weight of the composition. More preferably, however, the amount of added solvent will be in the range of 8 to 30 weight %, most preferably 10 to 20 weight %, based on the total weight of the composition.

Suitable solvents for addition to the radiation-curable vehicles are any of those conventionally used in the art, and include ketones and alcohols, such as ethanol, 2- (1-methylethoxy) acetate, cyclohexanone, 2-isopropoxyethanol and water.

Amounts of solvent, or "added solvent", outside the above ranges may, however, be used provided that the ability'to print the composition is not compromised, and provided that the desired embossed effect can ultimately be achieved. Generally, the amount of solvent used should be sufficient to allow the metallic particles to stand proud above the surface of the composition when printed, so as to allow embossing of those particles. Although compositions with very high solvent content may well prove difficult to print to acceptable results.

It may also be desirable to include in the compositions of the invention a thickening agent, or rheological additive, in order to achieve the desired flow properties for printing. The inclusion of a thickening agent may be particularly desirable when the composition comprises a relatively high amount of solvent, and/or when the composition is for use in screen printing applications. Without such a material it may be difficult to print the compositions to an acceptable standard.

A thickening agent, or rheological additive, may typically be included in the compositions of the invention in an amount of up to 5 weight % based on the total composition, with an amount in the range of 0.5 to 3 weight %, or 0.75 to 2 weight %, being preferred.

Any material conventionally used as a thickening agent or rheological additive in inks, or other compositions, may be used for this purpose in the present invention. Examples of suitable materials include gums, such as xanthan gum; waxes; hydrogenated oils; vinyl resins, such as polyvinyl butyral; clays, such as hectorite and bentonite; and gelatin.

In the above, discussed compositions and in particular the proportions of the ingredients of those compositions, have been described primarily in the context of tin or tin alloy-containing compositions. However, generally, the same or similar proportions of ingredients will be applicable for compositions containing metals other than tin, or such proportions may readily be determined by taking into account differences in specific gravity between tin or tin alloy and the metal of choice, in the usual way. For compositions containing metals having a similar specific gravity to tin, for instance copper, zinc and iron, similar proportions of ingredients to those recited above will generally be suitable.

The compositions may, in addition to the above-described ingredients, include ingredients conventionally used in the security field, and in particular in security inks, such as pigments, including interference pigments, dyes, pearlescent materials, fluorescent materials, luminescent materials, magnetic materials and other such authenticable materials.

The metallic compositions are prepared simply by mixing together their ingredients. The metallic compositions may be applied to a substrate by any suitable coating or printing technique. Examples of suitable printing techniques include flexographic, gravure, lithographic, screen (flatbed and rotary), and intaglio printing. Screen printing is, however, preferred. It is important that the composition is homogeneous when applied, and therefore stirring may be required right up until the moment of application.

Embossing of the optically variable effect generating structure is carried out once the composition is subjected to drying at elevated temperature, and then curing by exposure to suitable radiation.

Embossing is typically carried out through the combined application of heat and pressure. Embossing may be accomplished in a single operation or using a two-stage process with an initial crushing/mirror formation followed by micro-embossing, for instance to a depth of less than 1 µm. It is also possible to form macro-embossed features, to a depth of up to around 5 µm, or deeper.

Embossing may result in at least a partial deformation of the metallic particles, particularly when non-plate-like particles are used, as is preferred. Otherwise, embossing may simply cause a re-positioning, or re-alignment, of the metallic particles.

The embossing conditions will depend upon the properties of the ink, and the image to be embossed. Embossing may be carried out through the application of pressure alone, or a combination of heat and pressure. Typical embossing temperatures lie in the range 20 to 100°C, preferably 50 to 90°C. Embossing may be carried out using a heated embossing die, as in the processes of die stamping and foil blocking, or by intaglio printing, for instance by including an holographic image in an intaglio printing plate.

Embossing may be used to produce optically variable generating structures such as diffraction gratings, holographic devices, and non-holographic, reflective, devices.

Prior to application of the composition to a substrate, the substrate may be pre-coated or printed. In the case of a paper substrate, this can be done during papermaking or subsequent print processing.

Furthermore, after embossing, a protective coating may be applied to the embossed image. This protective coating prevents mechanical damage to the embossed image during use, and also assists in preventing copying by sealing in the embossed profile. In order to provide the desired mechanical properties, the material forming the protective coating must be both flexible and scratch resistant, as well as being resistant to attack by chemicals/solvents. Suitable examples include alkyl modified drying inks, UV curing inks, and polymeric films.

The invention is applicable particularly to security documents which include banknotes, cheques (whether bank or travellers), bonds, share certificates, licences, some types of identity cards, smart cards, passports, visas, tickets, passbooks, vouchers, deeds, tamper revealing seals and labels, brand authenticity labels and the like. Indeed, any security item based on a paper or a plastics material could be implemented using this invention. Of course, where a flexible item is required, such as a banknote, then suitable plastics materials should be chosen, for example polypropylene.

The present invention is now further illustrated by the following examples.

### Examples

The following compositions were prepared:

### Example 1 - Tin in a UV Curable Vehicle with Solvent

70% by weight of tin powder, mesh size 325, from Aldrich Chemical Company.
20% by weight of 80-049 UV screen varnish, from Nor-Cote UK Ltd.
10% by weight of screen ink thinner ZC530 from Sericol

### Example 2 - Tin in a UV Curable Vehicle with Solvent

75% by weight of tin powder (as in Example 1)
10% by weight of UV screen varnish (as in Example 1)
2.5% by weight of photoinitiator Irgacure 651, from Ciba Geigy
10% by weight of screen ink thinner (as in Example 1)
1% by weight of thickener Thixcin R, from Elementis Specialties
1.5% by weight of thickener Butvar B76, from Cairn International Ltd

### Example 3 - Tin in a UV Curable Water-based Vehicle

75% by weight of tin powder (as in Example 1)
12% by weight of varnish FZ381 Aquaspeed, from Sericol Ltd.
12% by weight of distilled water
1% by weight of gelatin (thickener).

### Comparative Example 1 - Tin in a UV Curable Vehicle

70% by weight of tin powder (as in Example 1)
30% by weight free radical UV cure screen varnish (as in Example 1)
No added solvent

### Comparative Example 2 - Aluminium Flake Paste in UV Curable Vehicle

5-25% by weight of aluminium paste
Balance :- free radical UV cure screen ink varnish (as in Example 1).

Each of the above-described compositions was screen-printed using a 90 threads/cm mesh on to plain banknote paper. In each of Examples 1 to 3 and Comparative Example 1, a dark grey print was obtained, and in Comparative Example 2 a shiny metallic film was obtained. Each print was dried using a hot air drier. The colour of each of the prints from Examples 1 to 3 changed to a pale matt grey; the dark grey print of Comparative Example 1 dried to a gloss film; and the shiny metallic film of Comparative Example 2 dried visually unchanged.

The UV-curable inks were then cured using a Primarc UV Curing Unit containing a mercury arc lamp rated at 80 watts/cm. The belt speed of the unit was matched to the speed of curing of the varnish, in this case equivalent to about 35 m/min.

The resulting prints were then each embossed at between 60 and 80°C using an intaglio press and an intaglio plate with an holographic shim glued into a recess therein, such that the surface of the shim was level with the rest of the intaglio plate.

Embossing was successfully achieved for each of the compositions of Examples 1 to 3. However, little or no emboss was achieved using the compositions of Comparative Examples 1 and 2.

## Claims

1. A method of applying an optically variable effect generating structure on a substrate, the method comprising
a) applying to the substrate a composition comprising metallic particles dispersed in a vehicle;
b) drying the composition;
c) curing the composition by exposure to radiation selected from UV, X-rays and electron beams; and then
d) embossing into the composition, an optically variable effect generating structure, wherein the vehicle is a radiation-curable vehicle and the composition further comprises solvent in addition to any solvent included in the vehicle.

2. A method according co claim 1, wherein the metallic particles are non-plate-like metallic particles.

3. A method according to claim 1, wherein the metallic particles are plate-like metallic particles.

4. A method according to any preceding claim, wherein the metallic particles are particles of a metal having a hardness on the Mohs Scale of not greater than 3.0, preferably not greater than 2.0.

5. A method according to any preceding claim, wherein the radiation-curable vehicle is a UV-curable vehicle.

6. A method according to any preceding claim, wherein the metallic particles comprise tin particles of tin or tin alloy.

7. A method according to any preceding claim, wherein the composition further comprises a thickening agent.

8. A method according to any preceding claim, wherein the composition is applied to the substrate by screen printing, flexographic printing, gravure printing, lithographic or intaglio printing, preferably screen printing.

9. A method according to any preceding claim, wherein embossing is carried out by application of pressure, optionally with heat, such as by intaglio printing or by die stamping.

10. A method according to any preceding claim, which further comprises, after embossing, applying a protective coating to the so-formed optically variable effect generating structure.

11. A method according to any preceding claim, wherein the optically variable effect generating structure generates a diffraction grating, or an holographic device or a non-holographic device.

12. A method according to any preceding claim, wherein the substrate is a security document, such as a banknote.

13. A security document obtainable by a method as defined in any preceding claim.

## Patentansprüche

1. Verfahren zum Aufbringen einer einen optisch veränderbaren Effekt erzeugenden Struktur auf einem Substrat, wobei das Verfahren einschließt:
a) das Aufbringen einer Zusammensetzung, die in einem Bindemittel dispergierte metallische Teilchen aufweist, auf dem Substrat;
b) das Trocknen der Zusammensetzung;
c) das Härten der Zusammensetzung durch Bestrahlung ausgewählt aus UV-, Röntgenstrahlung und Elektronenstrahlen und danach
d) das Prägen einer einen optisch veränderbaren Effekt erzeugenden Struktur in die Zusammensetzung, wobei das Bindemittel durch Bestrahlung härtbar ist und die Zusammensetzung ferner ein Lösungsmittel zusätzlich zu einem in dem Bindemittel enthaltenen Lösungsmittel aufweist.

2. Verfahren nach Anspruch 1, bei dem die metallischen Teilchen nicht plattenartig sind.

3. Verfahren nach Anspruch 1, bei dem die metallischen Teilchen plattenartig sind.

4. Verfahren nach einem der vorhergehenden Ansprüche, bei dem die metallischen Teilchen aus einem Metall bestehen, das auf der Mohsschen Skala eine Härte von höchstens 3,0, vorzugsweise höchstens 2,0, aufweist.

5. Verfahren nach einem der vorhergehenden Ansprüche, bei dem das durch Strahlung härtbare Bindemittel ein UV-härtbares Bindemittel ist.

6. Verfahren nach einem der vorhergehenden Ansprüche, bei dem die metallischen Teilchen Zinn-Teilchen aus Zinn oder aus einer Zinnlegierung aufweisen.

7. Verfahren nach einem der vorhergehenden Ansprüche, bei dem die Zusammensetzung ferner ein Verdickungsmittel aufweist.

8. Verfahren nach einem der vorhergehenden Ansprüche, bei dem die Zusammensetzung im Sieb-, Gummi-, Gravur-, Stein- oder Intaglio-Druckverfahren, vorzugsweise im Siebdruckverfahren, auf dem Substrat aufgebracht wird.

9. Verfahren nach einem der vorhergehenden Ansprüche, bei dem das Prägen durch Aufbringen von Druck, optional mit Wärme, z.B. im Intaglio-Druckverfahren oder durch Formstanzen, ausgeübt wird.

10. Verfahren nach einem der vorhergehenden Ansprüche, bei dem ferner nach dem Prägen ein Schutzüberzug auf der so gebildeten, einen optisch veränderbaren Effekt erzeugenden Struktur aufgebracht wird.

11. Verfahren nach einem der vorhergehenden Ansprüche, bei dem die einen optisch veränderbaren Effekt erzeugende Struktur ein Beugungsgitter oder eine holographische Vorrichtung oder eine nicht-holographische Vorrichtung erzeugt.

12. Verfahren nach einem der vorhergehenden Ansprüche, bei dem das Substrat ein Sicherheitsdokument ist, z.B. eine Banknote.

13. Sicherheitsdokument, das durch ein Verfahren nach einem der vorherstehenden Ansprüche herstellbar ist.

## Revendications

1. Procédé consistant à appliquer une structure de génération d'effet optiquement variable sur un substrat, le procédé comprenant :
a) l'application sur le substrat d'une composition comprenant des particules métalliques dispersées dans un véhicule ;
b) le séchage de la composition ;
c) le durcissement de la composition par exposition au à un rayonnement choisi parmi des UV, des rayons X et des faisceaux d'électrons, et ensuite
d) l'estampage dans la composition d'une structure de génération d'effet optiquement variable, dans lequel le véhicule est un véhicule durcissable par rayonnement et la composition comprend en outre un solvant en plus de tout solvant inclus dans le véhicule.

2. Procédé selon la revendication 1, dans lequel les particules métalliques sont des particules métalliques qui ne sont pas en paillettes.

3. Procédé selon la revendication 1, dans lequel les particules métalliques sont des particules métalliques en paillettes.

4. Procédé selon l'une quelconque des revendications précédentes, dans lequel les particules métalliques sont des particules en un métal ayant une dureté sur l'échelle de Mohs ne dépassant pas 3,0, de préférence, ne dépassant pas 2,0.

5. Procédé selon l'une quelconque des revendications précédentes, dans lequel le véhicule durcissable par rayonnement est un véhicule durcissable aux UV.

6. Procédé selon l'une quelconque des revendications précédentes, dans lequel les particules métalliques comprennent des particules d'étain ou d'alliage d'étain.

7. Procédé selon l'une quelconque des revendications précédentes, dans lequel la composition comprend en outre un agent épaississant.

8. Procédé selon l'une quelconque des revendications précédentes, dans lequel la composition est appliquée sur le substrat par sérigraphie, flexographie, héliogravure, lithographie ou impression en creux, de préférence par sérigraphie.

9. Procédé selon l'une quelconque des revendications précédentes, dans lequel l'estampage est effectué en appliquant une pression, éventuellement avec de la chaleur, comme par impression en creux ou timbrage-relief.

10. Procédé selon l'une quelconque des revendications précédentes, qui comprend en outre, après estampage, l'application d'une couche de protection sur la structure de génération d'effet optiquement variable ainsi formée.

11. Procédé selon l'une quelconque des revendications précédentes, dans lequel la structure de génération d'effet optiquement variable génère un réseau de diffraction, ou un dispositif holographique ou un dispositif non holographique.

12. Procédé selon l'une quelconque des revendications précédentes, dans lequel le substrat est un document sécurisé, tel qu'un billet de banque.

13. Document sécurisé pouvant être obtenu par un procédé tel que défini dans l'une quelconque des revendications précédentes.
